# EUROPÄISCHE PATENTSCHRIFT

(11) **EP 3 530 824 B1**
(45) Veröffentlichungstag und Bekanntmachung des Hinweises auf die Patenterteilung: **11.05.2022**
(21) Anmeldenummer: 18158131.5
(22) Anmeldetag: 22.02.2018
(51) Int. Cl.: E03D 11/14, H02G 3/08

(54) **MONTAGEEINHEIT FÜR EINEN SANITÄRARTIKEL**
ASSEMBLY UNIT FOR A SANITARY ARTICLE
UNITÉ DE MONTAGE POUR UN ARTICLE SANITAIRE

(43) Veröffentlichungstag der Anmeldung: 28.08.2019
(60) Teilanmeldung: 20180537.1
(73) Patentinhaber: Geberit International AG, 8645 Jona (CH)
(72) Erfinder: GREMLICH, Lukas, 8645 Jona (CH)
(74) Vertreter: Frischknecht, Harry Ralph

(56) Entgegenhaltungen:
- CH-B1- 702 238
- FR-A1- 2 790 604
- US-A- 1 798 838
- US-A- 3 701 448
- US-A- 4 934 644

## Beschreibung

### TECHNISCHES GEBIET

Die vorliegende Erfindung betrifft eine Montageeinheit zur Festlegung eines Rohres und zur Stromversorgung eines Sanitärartikels nach dem Oberbegriff von Anspruch 1, einen Montagerahmen für einen Sanitärartikel nach dem Oberbegriff von Anspruch 8, sowie ein Verfahren zur Festlegung eines Rohres und zur Stromversorgung eines Sanitärartikels mit einer solchen Montageeinheit nach dem Oberbegriff von Anspruch 11, und ein Verfahren zur Montage eines Sanitärartikels an einen solchen Montagerahmen nach dem Oberbegriff von Anspruch 12.

### STAND DER TECHNIK

Dusch-WCs verfügen üblicherweise über eine Duscheinrichtung, welche der Reinigung des Unterleibs eines Benutzers dient. Dazu ist üblicherweise ein Duscharm mit einer Duschdüse vorgesehen, welche im Duschbetrieb austretendes Duschwasser auf den Unterleib richtet. Damit keine Verschmutzung des Duscharms durch den Benutzer erfolgen kann, ist der Duscharm vorzugsweise beweglich ausgebildet. Dadurch kann der Duscharm gezielt für den Duschbetrieb in die Keramik, und vor beziehungsweise nach erfolgter Dusche wieder aus der Keramik heraus bewegt werden. Gegenüber herkömmlichen WCs erfordern Dusch-WCs somit sowohl Duschwasserleitungen zum Zuführen von Duschwasser in das Dusch-WC als auch Vorrichtungen, welche eine Stromversorgung des Dusch-WCs zulassen. Weiter kann zum Beispiel eine Geruchsabsaugung vorgesehen sein, die über elektrische Betätigungen und einen Lüftermotor verfügt, welche wiederum mit Strom versorgt werden müssen.

Oftmals fehlen allerdings Steckdosen und Stromanschlüsse in Badezimmern, welche einen Sanitärartikel mit Strom versorgen könnten. Beispielsweise befinden sich Steckdosen häufig neben einem Lichtschalter oder im Spiegelschrank. Es besteht daher ein Bedürfnis, Elektroanschlüsse in der Nähe von oder sogar am Montagerahmen vorzusehen.

Aus der EP 2 568 089 A1 ist eine WC-Anschlussvorrichtung in Form eines Montagerahmens für ein Dusch-WC bekannt, welche über eine elektrische Anschlusseinrichtung sowie eine Duschwasser-Anschlusseinrichtung verfügt. Bei der elektrischen Anschlusseinrichtung handelt es sich um eine Bohrung im Montagerahmen, durch welche eine elektrische Verbindung des Dusch-WCs mit einem sich hinter dem Montagerahmen befindlichen Elektroanschluss ermöglicht wird.

Eine Montageeinheit in Form einer Elektrodose und eines damit verbindbaren Befestigungsmittels zum Befestigen an ein Rohr ist z.B. aus US4934644 A bekannt.

Nachteilig bei solchen Vorrichtungen ist jedoch, dass die Installation eines Dusch-WCs Fachkräfte aus unterschiedlichen Gewerben bzw. Gewerken benötigt. So ist für die Montage des Dusch-WCs ein Sanitär erforderlich, während für das Anbringen des Elektroanschlusses und dessen Verbindung mit dem Dusch-WC ein Elektriker herbeizuziehen ist. Dies macht nicht nur die Installationsarbeiten aufwendig, sondern ist auch mit höheren Kosten verbunden.

### DARSTELLUNG DER ERFINDUNG

Es ist daher eine Aufgabe der vorliegenden Erfindung, die Nachteile des Standes der Technik zu überwinden. Insbesondere soll eine Montageeinheit und ein Montagerahmen bereitgestellt werden, welche jeweils eine einfache und kostengünstige Installation eines Sanitärartikels ermöglichen.

Diese Aufgabe wird gelöst durch eine Montageeinheit gemäss Anspruch 1 und durch einen Montagerahmen gemäss Anspruch 8.

So wird in einem ersten Aspekt eine Montageeinheit zur Festlegung eines Rohres, insbesondere eines Abwasserrohres, und zur Stromversorgung eines Sanitärartikels, insbesondere eines WCs oder Dusch-WCs, angegeben, welche eine Elektrodose zur Stromversorgung des Sanitärartikels und ein Befestigungsmittel, insbesondere eine Rohrschelle umfasst. Das Befestigungsmittel dient der Befestigung eines Rohrs, insbesondere eines Abwasserrohrs. Die Elektrodose ist an einem Montagerahmen für den Sanitärartikel befestigbar. Das Befestigungsmittel ist an der Elektrodose angeordnet.

Die Montageeinheit ermöglicht somit sowohl eine Stromversorgung des Sanitärartikels als auch deren Befestigung an einem Rohr und einem Montagerahmen. Die Montageeinheit erfüllt daher gewissermassen eine Doppelfunktion und bringt den Vorteil, dass eine einzige Einheit für unterschiedliche Funktionen wie Stromversorgung und Befestigung verwendet werden kann. Die Elektrodose ermöglicht dabei, dass, nachdem diese erstmals von einem Elektriker an das elektrische Netz angeschlossen wurde, ein Nicht-Elektriker wie zum Beispiel der Sanitärinstallateur den Sanitärartikel bei dessen Montage selber mit der Elektrodose verbinden kann. Dies gilt nicht nur für die erstmalige Montage des Sanitärartikels, sondern auch bei allfälligen späteren Wartungsarbeiten beziehungsweise beim Nachrüsten. Die Notwendigkeit, einen Elektriker sowie einen Sanitärinstallateur dafür aufbieten zu müssen, entfällt somit bei der vorliegenden Montageeinheit.

Die Elektrodose verfügt über eine Befestigungsstruktur und das Befestigungsmittel über eine komplementär dazu ausgebildete Befestigungsstruktur, wobei das Befestigungsmittel über seine Befestigungsstruktur an der Elektrodose lagerbar und bezüglich der Elektrodose horizontal verschiebbar ist. Das heisst, die Montageeinheit ist vorzugsweise mehrteilig aufgebaut, wobei die Elektrodose und das Befestigungsmittel separat voneinander ausgebildete und miteinander verbindbare Bauteile sind.

Weiter dienen die Befestigungsstruktur der Elektrodose und die komplementäre Befestigungsstruktur des Befestigungsmittels nicht nur einer Verbindung der Elektrodose mit dem Befestigungsmittel, sondern gestatten auch eine horizontale Verschiebung dieser Bauteile zueinander. Ist die Elektrodose beispielsweise über eine weitere Befestigungsstruktur am Montagerahmen befestigt und über die besagte Befestigungsstruktur mit dem Befestigungsmittel verbunden, so kann das Befestigungsmittel nun über seine Befestigungsstruktur in horizontaler Richtung auf die Elektrodose zu oder aber von der Elektrodose wegbewegt werden. Diese Befestigungsstrukturen erlauben also eine Tiefeneinstellung des Befestigungsmittels bezüglich des Montagerahmens. Ist das Befestigungsmittel dabei an einem Rohr befestigt, so erfolgt dabei auch eine Tiefeneinstellung des Rohres.

Die Elektrodose kann über eine weitere Befestigungsstruktur verfügen, mit welcher die Elektrodose an einer komplementär dazu ausgebildeten Befestigungsstruktur am Montagerahmen befestigbar ist.

Vorzugsweise weist die weitere Befestigungsstruktur die Form von einem oder mehreren von der Elektrodose hervorstehenden Rastelementen auf, welche in die als Rastaufnahme ausgebildete Befestigungsstruktur am Montagerahmen einrasten. Dadurch kann die Elektrodose lösbar am Montagerahmen befestigt werden und bei Bedarf vom Montagerahmen auch wieder entfernt werden. Wartungsarbeiten an der Elektrodose werden dadurch vereinfacht.

Vorzugsweise sind die besagte Befestigungsstruktur der Elektrodose und die Befestigungsstruktur des Befestigungsmittels jeweils im Wesentlichen U-förmig ausgebildet, wobei die Seitenschenkel der beiden U-förmigen Befestigungsstrukturen eine geführte Verbindung des Befestigungsmittels mit der Elektrodose ermöglichen.

Insbesondere sind die beiden Seitenschenkel der Befestigungsstruktur des Befestigungsmittels dabei in einem kleineren Abstand zueinander angeordnet als diejenigen der besagten Befestigungsstruktur der Elektrodose. Dadurch kann die Befestigungsstruktur des Befestigungsmittels beim Verbinden des Befestigungsmittels mit der Elektrodose in der besagten Befestigungsstruktur der Elektrodose aufgenommen werden. Die Seitenschenkel der besagten Befestigungsstruktur der Elektrodose dienen dabei als seitliche Führungen und verhindern gleichzeitig ein Verkippen des Befestigungsmittels gegenüber der Elektrodose.

Die Befestigungsstruktur des Befestigungsmittels sowie die besagte Befestigungsstruktur der Elektrodose verfügen jeweils zumindest abschnittsweise über ein Innengewinde und über ein Verbindungsmittel mit einem Aussengewinde, insbesondere eine Schraube, miteinander verbindbar sein, wobei eine Drehung des Verbindungsmittels um eine Drehachse eine translatorische Bewegung des Befestigungsmittels in horizontaler Richtung bewirkt.

So ist es denkbar, jeweils ein Innengewinde zwischen den beiden Seitenschenkeln der U-förmigen Befestigungsstrukturen vorzusehen, welche, wenn die Schraube zwischen die Seitenschenkel geführt wird, mit dem Aussengewinde der Schraube in einen Gewindeeingriff gehen können. Eine Drehung der Schraube entlang einer ersten Drehrichtung bewirkt dann, dass sich die Befestigungsstruktur und somit das Befestigungsmittel translatorisch entlang dem Aussengewinde der Schraube bewegen. Eine Drehung der Schraube entlang einer der ersten Drehrichtung entgegengesetzten zweiten Drehrichtung führt entsprechend zu einer translatorischen Bewegung des Befestigungsmittels, welche entgegengesetzt zur ersten Bewegungsrichtung ist. Dadurch kann das Befestigungsmittel mittels der Schraube auf einfache und kontrollierte Weise auf die Montagewand ausgerichtet werden.

Das Befestigungsmittel kann in einer anderen Ausführung integral an der Elektrodose angeformt sein. Das heisst, das Befestigungsmittel und die Elektrodose bilden dann eine einstückige Struktur.

Vorzugsweise ist das Befestigungsmittel eine Rohrschelle, welche weiter einen Schellenmantel zur Umschliessung des Abwasserrohres und einen Schliessmechanismus zum Verschliessen des Schellenmantels umfasst, wobei der Schellenmantel und die Befestigungsstruktur der Rohrschelle spiegelsymmetrisch bezüglich einer Spiegelung an einer vertikal durch die Befestigungsstruktur verlaufenden Spiegelebene ausgebildet sind.

Dadurch, dass der Schellenmantel und die Befestigungsstruktur spiegelsymmetrisch ausgebildet sind, ist eine Befestigung der Rohrschelle an der Elektrodose in zwei, jeweils um 180 Grad zueinander verdrehten, Ausrichtungen möglich. Dadurch kann die Befestigungsweise der Rohrschelle abhängig von der Umgebung und den Platzverhältnissen optimal gewählt werden.

Die Elektrodose weist vorzugsweise einen Stecker auf, welcher im Einbauzustand der Montageeinheit wandseitig mit einem Netzkabel verbunden ist und frontseitig mit einem Elektroelement, insbesondere einem Netzteil, verbindbar ist. Dadurch kann die Elektrodose zu einem beliebigen Zeitpunkt mit einem Elektroelement, wie zum Beispiel dem Netzteil des Sanitärartikels verbunden werden, ohne dass ein Elektriker benötigt wird. Auch erlaubt diese Ausgestaltung, defekte Netzteile auf einfache Weise zu entfernen und durch neue zu ersetzen. Vorzugsweise handelt es sich bei der Verbindung zwischen dem Netzteil und dem Stecker um eine elektrische Steckverbindung.

Vorzugsweise ist der Stecker frontseitig im Einbauzustand der Montageeinheit frei zugänglich, und wobei der Stecker frontseitig im Einbauzustand, im Falle eines mit der Elektrodose verbundenen Sanitärartikels, vorzugsweise durch den Sanitärartikel überdeckt wird.

Das heisst, es ist bevorzugt den Stecker und insbesondere auch die Elektrodose nach deren Befestigung am Montagerahmen nicht zu verkleiden oder zu verputzen. Weiter ist es vorteilhaft, den Stecker und vorzugsweise auch die Elektrodose derart am Montagerahmen anzuordnen, dass diese durch einen am Montagerahmen befestigten Sanitärartikel von diesem überdeckt werden. So können der Stecker und die Elektrodose leicht zugänglich und gleichzeitig für einen Benutzer des Sanitärartikels unsichtbar sein.

In einem weiteren Aspekt wird ein Montagerahmen für einen Sanitärartikel, insbesondere ein WC oder Dusch-WC, angegeben, welcher eine Spülrohr-Aufnahme zur Aufnahme eines Spülrohrs zum Zuleiten von Spülwasser in den Sanitärartikel, die Montageeinheit gemäss der vorliegenden Erfindung, und mindestens eine erste und eine zweite Befestigungseinrichtung zur Befestigung des Sanitärartikels am Montagerahmen umfasst. Die Spülrohr-Aufnahme, das Befestigungsmittel sowie die erste und zweite Befestigungseinrichtung definieren einen Zwischenraum, wobei die Elektrodose Zwischenraum angeordnet ist.

Wie eingangs bereits beschrieben, ermöglicht die Elektrodose, dass, nachdem diese erstmals von einem Elektriker an das elektrische Netz angeschlossen wurde, ein Nicht-Elektriker wie zum Beispiel der Sanitärinstallateur den Sanitärartikel bei dessen Montage selber mit der Elektrodose verbinden kann. Dies gilt nicht nur für die erstmalige Montage des Sanitärartikels, sondern auch bei allfälligen späteren Wartungsarbeiten oder beim Nachrüsten.

Bei den Befestigungseinrichtungen handelt es sich vorzugsweise um Montagelöcher, in welche lasttragende Gewindestangen zur Befestigung des Sanitärartikels eingeführt werden können. Unter der Spülrohr-Aufnahme und dem Befestigungsmittel kann ein Befestigungsmittel verstanden werden, welches das Spülrohr bzw. Abwasserrohr aufnehmen und mit entsprechenden Leitungen des Sanitärartikels verbinden kann.

Der Zwischenraum wird vorzugsweise durch zwei senkrechte Ebenen, welche in Einbaulage senkrecht durch die erste beziehungsweise zweite Befestigungseinrichtung verlaufen, und durch zwei horizontale Ebenen, welche in Einbaulage horizontal durch die Spülrohr-Aufnahme beziehungsweise das Befestigungsmittel verlaufen, definiert.

Oder anders gesagt kann der Zwischenraum durch zwei senkrechte Ebenen, welche sich entlang der Mittellinien der Montageöffnungen erstrecken, und durch zwei horizontale Ebenen, welche orthogonal zu diesen senkrechten Ebenen stehen und horizontal durch die Spülrohr-Aufnahme und das Befestigungsmittel verlaufen, definiert werden. Vorzugsweise ist der Zwischenraum derart angeordnet, dass er im Einbauzustand des Montagerahmens frei zugänglich ist, und wobei der Zwischenraum im Einbauzustand, im Falle eines mit dem Montagerahmen verbundenen Sanitärartikels, vorzugsweise durch den Sanitärartikel überdeckt wird.

Wie oben bereits erläutert wurde, ist es bevorzugt den Stecker und insbesondere auch die Elektrodose nach deren Befestigung am Montagerahmen frei zugänglich zu belassen. Folglich wird auch der Zwischenraum, in welchem die Elektrodose angeordnet wird, weder verkleidet noch verputzt. Indem der Zwischenraum dabei durch die Spülrohr-Aufnahme, das Befestigungsmittel sowie die erste und zweite Befestigungseinrichtung begrenzt wird, verfügt er über Dimensionen, die bei einem am Montagerahmen befestigen Sanitärartikel von diesem überdeckt werden. So können sowohl ästhetischen als auch praktische Anforderungen gleichzeitig erfüllt werden.

Das Befestigungsmittel ist vorzugsweise eine Rohrschelle.

Das heisst, bei der Elektrodose und der Rohrschelle des Montagerahmens handelt es sich um die Montageeinheit im Sinne der vorliegenden Erfindung.

Weiter ist es bevorzugt, dass auch die Spülrohr-Aufnahme eine Rohrschelle ist, welche mit dem Spülrohr verbunden werden kann.

Bezüglich der Ausbildung der Elektrodose wird ebenfalls auf obige Beschreibung bezüglich der Elektrodose verwiesen.

In noch einem weiteren Aspekt wird ein Verfahren zur Festlegung eines Rohres, insbesondere eines Abwasserrohres, und zur Stromversorgung eines Sanitärartikels, insbesondere eines WCs oder Dusch-WCs, mit einer Montageeinheit wie oben beschrieben angegeben, welches die Schritte umfasst:
- Befestigen der Elektrodose an einem Montagerahmen,
- Befestigen der Elektrodose am Befestigungsmittel,
- Befestigen des Befestigungsmittels am Rohr, und
- Elektrisches Verbinden der Elektrodose mit dem Sanitärartikel.

Es gilt zu verstehen, dass die Reihenfolge dieser Schritte beliebig gewählt werden kann. So ist es denkbar, zuerst die Elektrodose am Montagerahmen zu befestigen, dann das Befestigungsmittel am Rohr zu befestigen, dann wiederum die Elektrodose am Befestigungsmittel zu befestigen, und schlussendlich die Elektrodose mit dem Sanitärartikel elektrisch zu verbinden. Genauso ist es allerdings denkbar, zuerst die Elektrodose am Montagerahmen zu befestigen, dann die Elektrodose am Befestigungsmittel zu befestigen, dann wiederum das Befestigungsmittel am Rohr zu befestigen, und schlussendlich die Elektrodose mit dem Sanitärartikel elektrisch zu verbinden.

In noch einem weiteren Aspekt wird ein Verfahren zur Montage eines Sanitärartikels, insbesondere eines WCs oder Dusch-WCs, an einem Montagerahmen wie oben beschrieben angegeben, gekennzeichnet durch die Schritte:
- Befestigen der Elektrodose am Montagerahmen,
- Befestigen des Sanitärartikels am Montagerahmen, und
- Elektrisches Verbinden der Elektrodose mit dem Sanitärartikel.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht eines Montagerahmens mit einer Montageeinheit umfassend eine Elektrodose und eine Rohrschelle, wobei die Rohrschelle ein Abwasserrohr festlegt;
- Fig. 2: eine Vorderansicht des Montagerahmens mit der Montageeinheit gemäss Figur 1;
- Fig. 3: eine Explosionsansicht der Montageeinheit mit Abwasserrohr gemäss Figur 1;
- Fig. 4: eine Vorderansicht der Montageeinheit mit Abwasserrohr gemäss Figur 1;
- Fig. 5: eine perspektivische Ansicht der Montageeinheit gemäss Figur 1;
- Fig. 6: eine Vorderansicht der Montageeinheit gemäss Figur 1, wobei die Rohrschelle um 180 Grad verdreht ist;
- Fig. 7: ein Längsschnitt durch die Montageeinheit der Figur 6 entlang der Schnittlinie A-A;
- Fig. 8: ein Längsschnitt durch die Montageeinheit der Figur 6 entlang der Schnittlinie B-B;
- Fig. 9: ein Längsschnitt durch die Montageeinheit der Figur 6 entlang der Schnittlinie C-C.

### BESCHREIBUNG BEVORZUGTER AUSFÜHRUNGSFORMEN

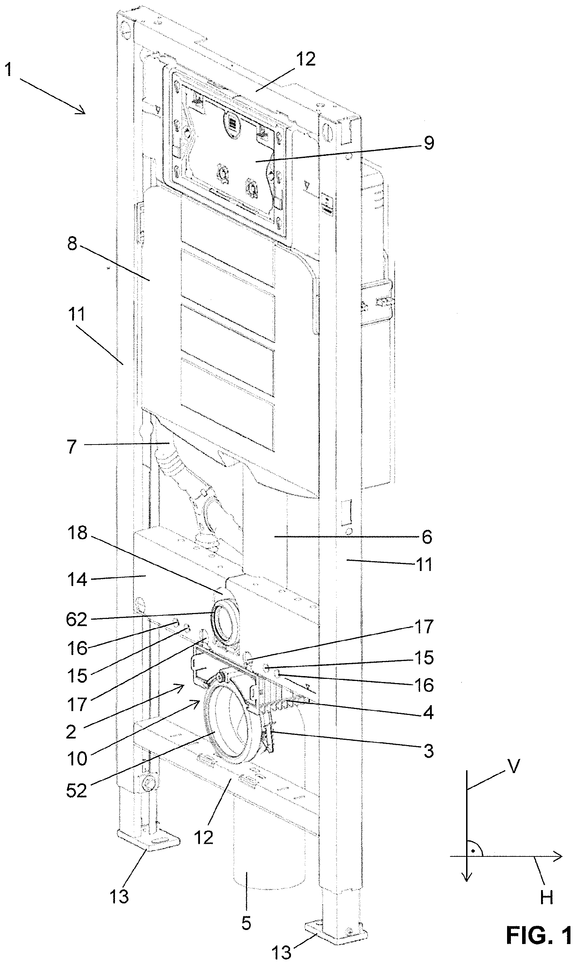

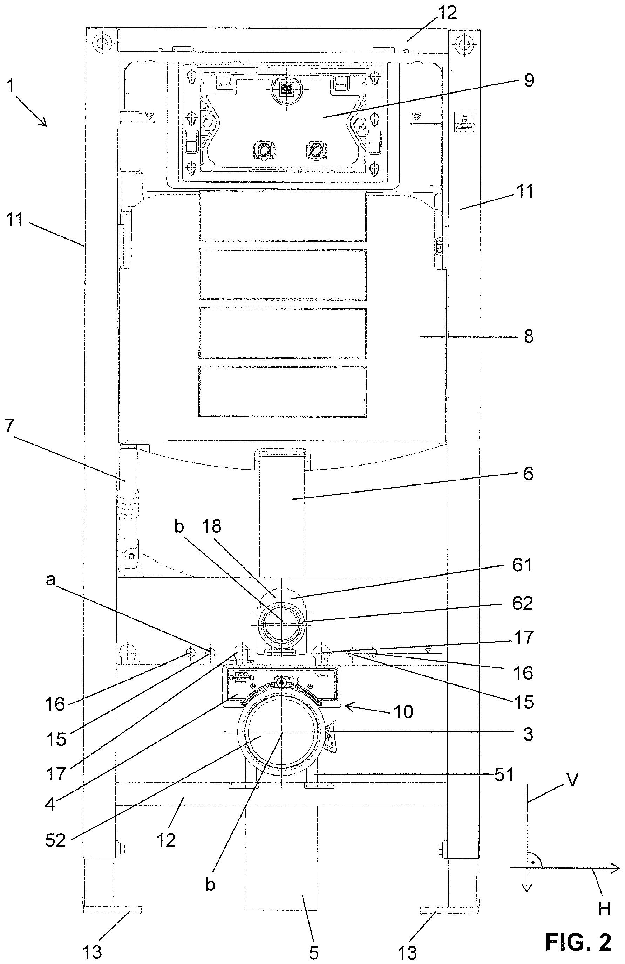

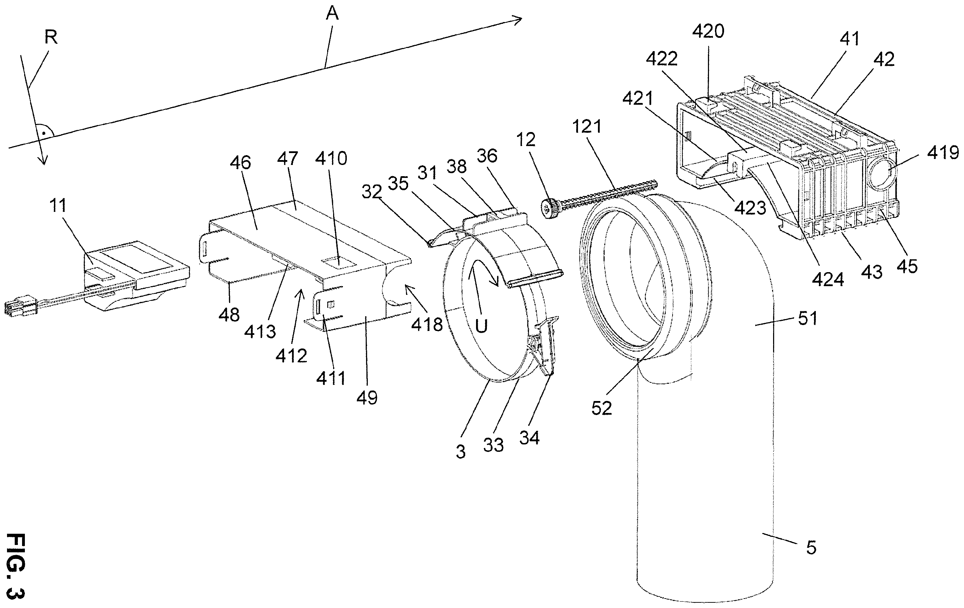

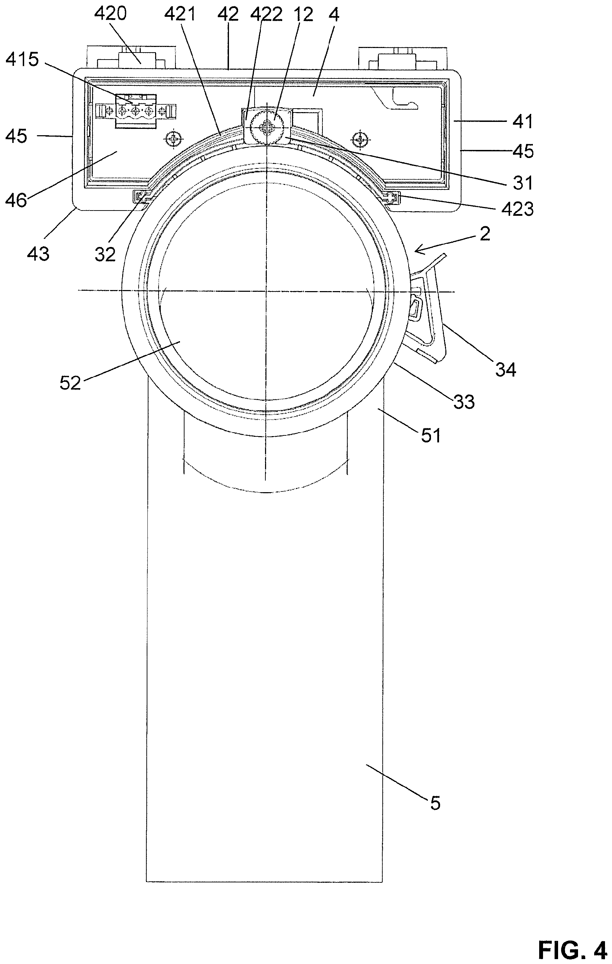

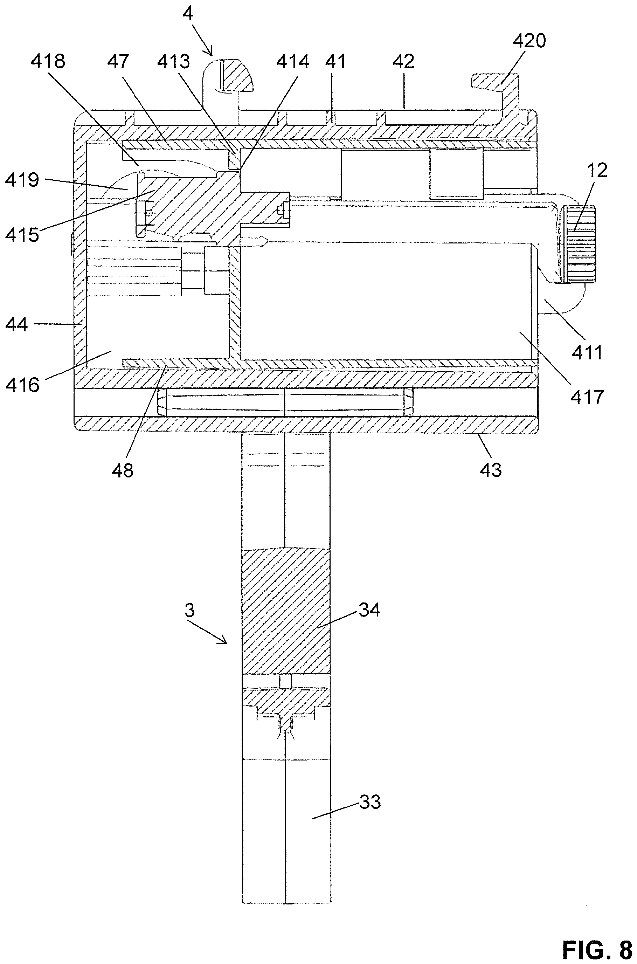

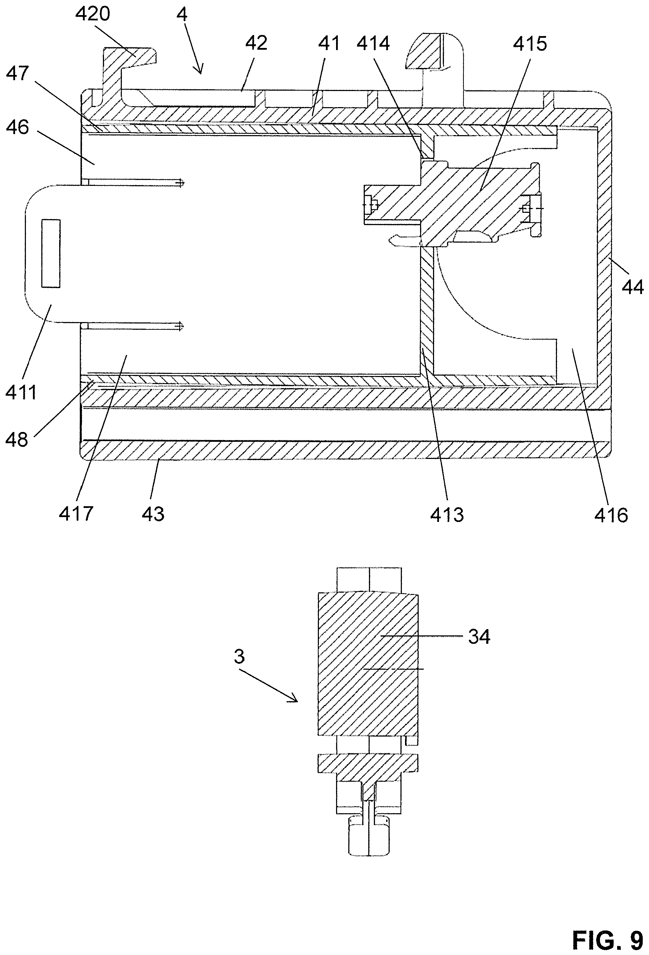

In den Figuren 1 und 2 ist jeweils ein Montagerahmen 1 mit daran befestigter Montageeinheit 2 umfassend ein Befestigungsmittel 3 in Form einer Rohrschelle und eine Elektrodose 4 dargestellt. Am Montagerahmen 1 kann ein Sanitärartikel wie ein WC oder Dusch-WC befestigt werden. Die Montageeinheit 2 wiederum dient mittels der Rohrschelle 3 der Festlegung eines Abwasserrohres 5 und eine Stromversorgung des Dusch-WCs wird über die Elektrodose 4 erreicht. Die genaue Struktur der Rohrschelle 3 und der Elektrodose 4 werden im Zusammenhang mit den Figuren 3 bis 9 eingehend erläutert.

Wie aus den Figuren 1 und 2 hervorgeht, umfasst der Montagerahmen 2 zwei sich entlang einer vertikalen Richtung V erstreckende Vertikalstreben 11 und zwei sich senkrecht zur vertikalen Richtung V, entlang einer horizontalen Richtung H, erstreckende Horizontalstreben 12. Die Vertikalstreben 11 verfügen in dem hier gezeigten Beispiel über teleskopierbare Füsse 13, welche eine Höheneinstellung des Montagerahmens 1 erlauben. Zwischen den beiden Horizontalstreben 12 ist ein sich ebenfalls in horizontaler Richtung H erstreckendes Montageblech 14 mit einer Vielzahl von Öffnungen 15, 16, 17 eingesetzt. Diejenigen Öffnungen, welche sich in einem dem Boden zugewandten unteren Bereich des Montageblechs 14 befinden, dienen als Montagelöcher 15, 16 für die Befestigung des Sanitärartikels am Montagerahmen 1 beziehungsweise bilden einen Auslass 17 für Duschwasserleitungen 7. Die Montagelöcher 15, 16 weisen einen kleineren Durchmesser als die Auslassöffnungen 17 für die Duschwasserleitungen 7 auf, wobei sich die Auslassöffnungen 17 zwischen jeweils zwei äusseren Montagelöcher 16 und zwei inneren Montagelöcher 15 befinden. Zudem weist das Montageblech 14 mittig eine Ausnehmung 18 auf, welche einen Auslass für das Spülrohr 6 bildet.

Das Abwasserrohr 5 verfügt über ein Winkelrohrstück 51, welches mit einem hier nicht dargestellten Abwasserleitungs-Rohrstutzen im Sanitärapparat verbunden werden kann. Der abgewinkelte Bereich des Winkelrohrstücks 51 befindet sich dabei zwischen der unteren Horizontal strebe 12 und dem Montageblech 14 und kann über ein Befestigungsmittel 3, welche das Abwasserrohr 5 zum Ableiten von Abwasser aus dem Sanitärartikel aufnimmt, mit dem Abwasserleitungs-Rohrstutzen des Sanitärapparats verbunden werden. Das Befestigungsmittel 3 kann somit auch als Befestigungsmittel, zum Beispiel in Form einer Rohrschelle, zur Befestigung des Abwasserrohres 5 angesehen werden. Auch das Spülrohr 6 verfügt über ein Winkelrohrstück 61, welches mit einem hier nicht dargestellten Spülwasserzuleitungs-Rohrstutzen im Sanitärapparat verbunden werden kann. Der abgewinkelte Bereich dieses Winkelrohrstücks 61 erstreckt sich dabei durch die mittige Ausnehmung 18 im Montageblech 14 und kann über eine Spülrohr-Aufnahme, welche das Spülrohr 6 zum Zuleiten von Spülwasser in den Sanitärartikel aufnimmt, mit dem Spülwasserzuleitungs-Rohrstutzen im Sanitärapparat verbunden werden. Die Spülrohr-Aufnahme kann somit ebenfalls als Befestigungsmittel, zum Beispiel in Form einer Rohrschelle, zur Befestigung des Spülrohrs 6 angesehen werden.

Die Duschwasserleitungen 7 sowie das Spülrohr 6 sind jeweils mit einem Spülkasten 8 verbunden, welcher im Montagerahmen 1 aufgehängt ist. Oberhalb des Spülkastens 8 befindet sich ein Betätigungsmechanismus 9, dessen Betätigung einen Spülvorgang bewirkt. An der dem Boden zugewandten Unterseite ist das Montageblech 14 mit der Elektrodose 4 verbunden. Die Elektrodose 4 befindet sich hierbei also in einem Zwischenraum 10, welcher durch die Spülrohr-Aufnahme und das Befestigungsmittel 3 bzw. das darin liegende Abwasserrohr sowie die Montagelöcher 15, 16 begrenzt wird. Im vorliegenden Beispiel wird der Zwischenraum 10 durch die inneren Montagelöcher 15 definiert. Es ist jedoch genauso denkbar, dass die äusseren Montagelöcher oder, im Falle von mehr als vier Montagelöcher, die weiteren Montagelöcher den Zwischenrum seitlich begrenzen.

Mit anderen Worten gesagt wird der Zwischenraum 10 durch zwei senkrechte Ebenen, welche sich entlang der Mittellinien a der Montageöffnungen erstrecken, und durch zwei horizontale Ebenen, welche orthogonal zu diesen senkrechten Ebenen stehen und horizontal durch die Spülrohr-Aufnahme und das Befestigungsmittel verlaufen, definiert. Unter der Mittellinie a, welche sich durch die Montageöffnung erstreckt, ist eine sich zentral durch die Montageöffnung 15, 16 hindurch erstreckende longitudinale Achse zu verstehen. Analog ist unter einer Mittellinie b der Spülrohr-Aufnahme sowie das Befestigungsmittel eine sich zentral durch die Spülrohr-Aufnahme bzw. das Befestigungsmittel hindurch erstreckende longitudinale Achse zu verstehen. Die Mittellinien a, b respektive Achsen der Montageöffnungen sowie der Spülrohr- Aufnahme bzw. der Befestigungsmittel verlaufen parallel zueinander. Eine Definition des Zwischenraums 10 kann anstelle über die Spülrohr-Aufnahme und das Befestigungsmittel auch über das mit dem Spülwasserzuleitungs-Rohrstutzen beziehungsweise Abwasserleitungs-Rohrstutzen zu verbindende Spülrohr-Endstück 62 beziehungsweise Abwasserrohr-Endstück 52 erfolgen. Unter dem Spülrohr-Endstück 62 und dem Abwasserrohr-Endstück 52 wird hierbei der entlang der horizontalen Richtung H, parallel zur Mittellinie a der Montageöffnungen verlaufende abgewinkelte Endbereich der obgenannten Winkelrohrstücke 51, 61 verstanden. Wie die Spülrohr-Aufnahme und das Befestigungsmittel 3 weisen auch das Spülrohr-Endstück 62 und Abwasserrohr-Endstück 52 jeweils eine zentral durch das Spülrohr-Endstück und Abwasserrohr-Endstück verlaufende Achse auf, welche als Mittellinie bezeichnet werden kann und mit der Mittellinie b der Spülrohr-Aufnahme respektive das Befestigungsmittel zusammenfällt.

Der Abstand zwischen den Mittellinien a der inneren Montagelöchern 15 beträgt zwischen 150 und 250 Millimeter, und/oder der Abstand zwischen den Mittellinien a der inneren Montagelöchern 15 und der Mittellinie b des Spülrohr-Endstücks 62 beträgt zwischen 20 und 50 Millimeter. Weiter kann der Abstand zwischen den Mittellinien a der inneren Montagelöcher 15 und der Mittellinie b des Abwasserrohr-Endstücks 52 zwischen 80 und 120 Millimeter betragen, und/oder der Abstand zwischen den Mittellinien b des Spülrohr-Endstücks 62 und des Abwasserrohr-Endstücks 52 beträgt zwischen 120 und 150 Millimeter. Bevorzugt beträgt der Abstand zwischen den Mittellinien a der inneren Montagelöchern 15 180 Millimeter oder 230 Millimeter und der Abstand zwischen den Mittellinien a der inneren Montagelöchern 15 und der Mittellinie b des Spülrohr-Endstücks 62 35 Millimeter. Ebenfalls bevorzugt ist der Abstand zwischen den Mittellinien a der inneren Montagelöcher 15 und der Mittellinie b des Abwasserrohr-Endstücks 52 100 Millimeter, und der Abstand zwischen den Mittellinien b des Spülrohr-Endstücks 62 und des Abwasserrohr-Endstücks 52 beträgt 135 Millimeter. Diese Befestigungsmasse entsprechen dabei der Norm DIN EN 33:2011-11.

Der Zwischenraum 10 ist dabei derart im Montagerahmen 1 ausgebildet, dass er im Einbauzustand des Montagerahmens 1 im Falle eines mit dem Montagerahmen 1 verbundenen Sanitärartikels durch den Sanitärartikel überdeckt wird, ohne dass eine zusätzlich Abdeckung oder ein Einbinden des Zwischenraums 10 in das Bauwerk beispielsweise durch Verputzen oder Verkleiden notwendig ist. Entsprechend liegt der Zwischenraum 10 nach Entfernen des Sanitärartikels sofort wieder frei und ist von aussen zugänglich. Gleiches gilt natürlich für eine im Zwischenraum 10 angeordnete Elektrodose 4. Dies bringt den Vorteil, dass Wartungsarbeiten an der Elektrodose 4 einfach und mit kleinem Aufwand möglich sind.

Wie weiter aus den Figuren 1 und 2 hervorgeht, ist die Elektrodose 4 mit dem Montagerahmen 1, hier mit dem Montageblech 14, und mit der Rohrschelle 3 verbunden, welche am Abwasserrohr 5 angebracht ist. In diesem Zustand ist das Abwasserrohr 5 festgelegt und eine Stromversorgung des Sanitärartikels kann erfolgen.

Wie insbesondere in Figur 3 ersichtlich ist, kann die Elektrodose 4 zweiteilig ausgebildet sein und über einen Aussenteil 41 verfügen, in welchen ein Innenteil 46 aufgenommen wird. Der Aussenteil 41 der Elektrodose 4 ist im Wesentlichen rechteckig ausgebildet und verfügt über eine mit dem Montagerahmen 1 zu verbindende Oberseite 42, eine mit dem Befestigungsmittel 3 zu verbindende Unterseite 43, eine Hinterseite 44 sowie zwei seitliche Seiten 45. Damit die Oberseite 42 des Aussenteils 41 mit dem Montagerahmen 1 verbunden werden kann, sind Befestigungsmittel 420 in Form von Rastnasen vorgesehen, welche sich von der Oberseite 42 des Aussenteils 41 nach aussen weg erstrecken und dazu ausgebildet sind, in entsprechende Ausnehmungen im Montagerahmen einzugreifen, um so den Aussenteil 41 der Elektrodose 4 am Montagerahmen 1 zu befestigen. Insbesondere wird hier der Aussenteil 41 am Montageblech 14 des Montagerahmens 1 befestigt, wobei das Montageblech auf seiner der Elektrodose 4 zugewandten Unterseite vorzugsweise über komplementär zu den Rastnasen ausgebildete Rastöffnungen aufweist, in welche die Rastnasen eingreifen oder einschnappen können. Auf seiner Unterseite weist der Aussenteil 41 eine Verformung 421 auf, welche die Form eines Zylindersegments aufweist und der Aussenform des Abwasserrohrs 5 nachgebaut ist. Die Verformung 421 erstreckt sich hier longitudinal durch die gesamte Unterseite 41 des Aussenteils 41 hindurch und weist im Querschnitt die Form eines Kreisbogens auf. Wie nachstehend genau erläutert wird, ist eine Befestigungsstruktur 422 zur Befestigung des Aussenteils 41 der Elektrodose 4 mit einer entsprechenden Befestigungsstruktur 31 am Befestigungsmittel 3, hier der Rohrschelle vorgesehen, welche sich mittig jeweils am Ort des maximalen Abstands des Kreisbogens von der Kreissehne der bogenförmigen Verformung 421 entlang der Verformung erstreckt. Am Ort des Übergangs von den beiden parallel zur Oberseite 42 des Aussenteils 41 verlaufenden Bereichen der Unterseite 43 zu der bogenförmigen Verformung 421 sind weiter sich in eine Wand des Aussenteils 41 erstreckende Nuten 423 vorgesehen. In diese Nuten 423 werden beim Verbinden des Befestigungsmittels 3 mit dem Aussenteil 41 entsprechend ausgebildete radial nach aussen vorstehende Rippen 32 am Befestigungsmittel 3 aufgenommen. Die Unterseite des Aussenteils 43 weist also zwei Befestigungs- oder Verbindungsstrukturen 422, 423 zur Befestigung des bzw. Verbindung mit dem Befestigungsmittel 3 auf.

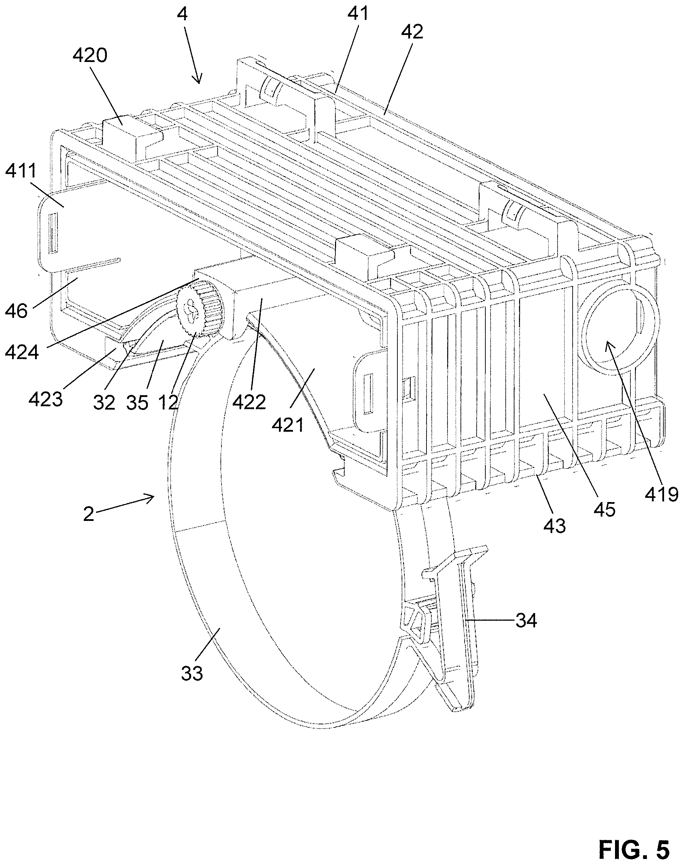

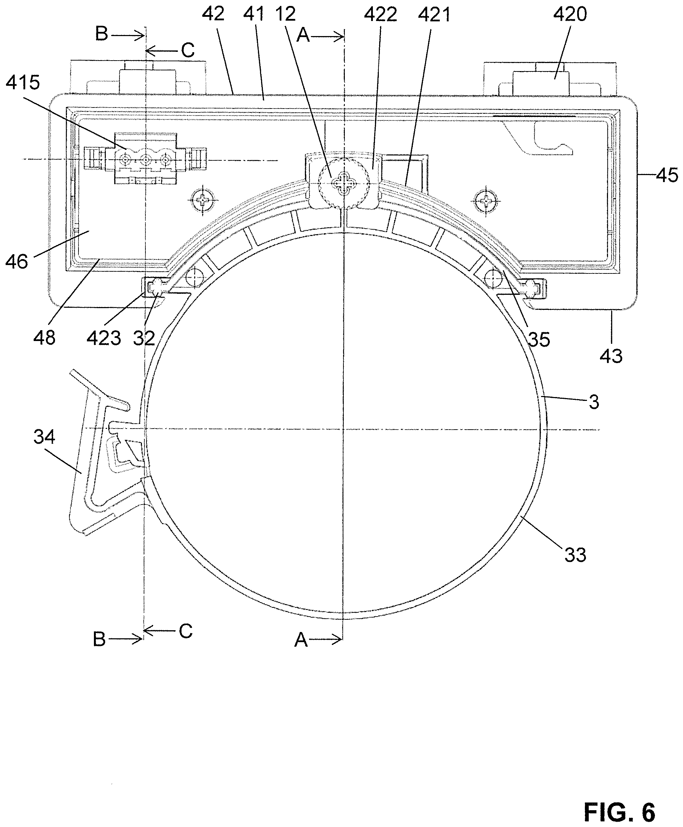

Einerseits ist dies die im Wesentlichen U-förmig ausgebildete Befestigungsstruktur 422, welche sich mittig entlang der bogenförmigen Verformung 421 erstreckt. Diese Befestigungsstruktur 422 ist mit der ebenfalls im Wesentlichen U-förmig ausgebildeten Befestigungsstruktur 31 am Befestigungsmittel 3 verbindbar. Im vorliegenden Fall handelt es sich beim Befestigungsmittel 3 um eine Rohrschelle, welche einen Schellenmantel 33 zur Umschliessung des Abwasserrohres 5 und einen Schliessmechanismus 34 zum Verschliessen des Schellenmantels 33 umfasst. Insbesondere ist die Rohrschelle eine Bandrohrschelle 3, welche ein beschichtetes, flexibles Band 33 und einen Rastverschluss 34 aufweist. Der Schellenmantel 33 und die Befestigungsstruktur 31 der Rohrschelle 3 sind dabei spiegelsymmetrisch bezüglich einer Spiegelung an einer vertikal durch die Befestigungsstruktur 31 verlaufenden Spiegelebene ausgebildet. Dies ermöglicht, dass die Rohrschelle um jeweils 180 Grad verdreht an der Elektrodose 4 befestigt werden kann, wie beispielsweise durch einen Vergleich der Figuren 5 und 6 hervorgeht.

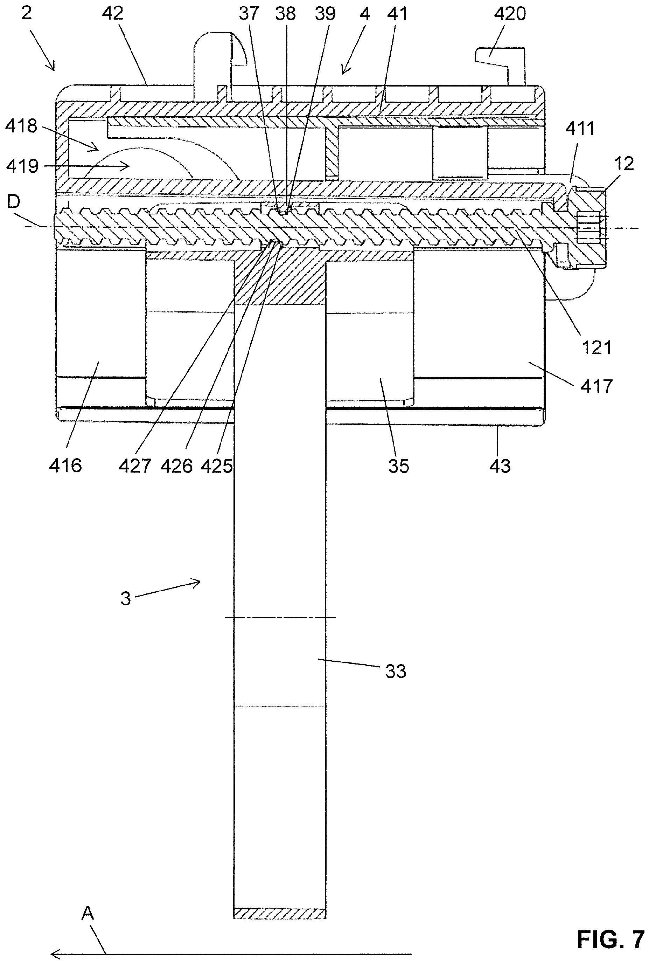

Der Schellenmantel 33 verfügt weiter über einen gekrümmten Flansch 35, welcher sich zumindest teilweise entlang der Umfangsrichtung U des Schellenmantels 33 erstreckt. Weiter erstreckt sich der Flansch 35 bezüglich einer axial zur zentralen Achse der Rohrschelle 3 verlaufenden axialen Richtung A wie auch bezüglich einer senkrecht zu dieser axialen Richtung A verlaufenden radialen Richtung R über den Schellenmantel 33 hinaus. Anders gesagt ist die Fläche des Flansches 35 grösser als dessen Auflagefläche auf dem Schellenmantel 33. Die Krümmung des Flansches 35 entspricht dabei in etwa der Krümmung der bogenförmigen Verformung 421 des Aussenteils 41. Die U-förmige Befestigungsstruktur 31 befindet sich mittig auf einer Oberfläche des Flansches 35 und erstreckt sich entlang der gesamten Breite dieser Oberfläche. Wie weiter gut in Figur 3 ersichtlich ist, stehen sich die U-förmige Befestigungsstruktur 31 der Rohrschelle 3 und die U-förmige Befestigungsstruktur 422 der Elektrodose 4 bei deren Verbindung miteinander um 180 Grad verdreht zueinander gegenüber. Weiter ist der Abstand zwischen den beiden Seitenschenkel 36 der U-förmigen Befestigungsstruktur 31 der Rohrschelle 3 kleiner als der Abstand der beiden Seitenschenkel 424 der U-förmigen Befestigungsstruktur 422 der Elektrodose 4, so dass die Befestigungsstruktur 31 der Rohrschelle 3 in der Befestigungsstruktur 422 der Elektrodose 4 aufnehmbar ist. Vorzugsweise ist der Abstand der Seitenschenkel 36 der Befestigungsstruktur 31 der Rohrschelle 3 dabei gerade um so viel kleiner, um eine Berührung zwischen der Aussenseite der Seitenschenkel 36 der Befestigungsstruktur 31 der Rohrschelle 3 und der Innenseite der Seitenschenkel 424 der Befestigungsstruktur 422 der Elektrodose 4 zu ermöglichen. Dadurch wird eine geführte Verbindung der beiden Befestigungsstrukturen 422, 31 ermöglicht während gleichzeitig ein Verkippen der Rohrschelle 3 gegenüber der Elektrodose 4 verhindert wird. Um eine fixe Verbindung der beiden Befestigungsstrukturen 422, 31 zu gewährleisten verfügen die Befestigungsstrukturen 422, 31 zumindest abschnittsweise über ein Innengewinde 425, 37 und es ist ein Verbindungsmittel 12 mit einem Aussengewinde 121 vorgesehen, welches mit den beiden Innengewinden 425, 37 in einen Gewindeeingriff gehen kann. Dazu weisen die Befestigungsstrukturen 422, 31 jeweils einen Steg 426, 38 auf, welcher sich jeweils durch die U-förmige Ausnehmung von dem einen Seitenschenkel 424, 36 zum anderen Seitenschenkel 424, 36 der U-förmigen Befestigungsstruktur 422, 31 erstreckt. Der Steg 426, 38 weist eine zentrale Durchgangsöffnung 427, 39 mit einem Innengewinde 425, 37 auf, durch welche das Verbindungsmittel 12 hindurch geführt werden kann. Wie insbesondere in Figur 7 ersichtlich ist, sind die Stege 426, 38 in den beiden Befestigungsstrukturen 422, 31 bezüglich der zentralen Achse versetzt zueinander angeordnet. Beispielsweise können die beiden Stege 426, 38 derart versetzt zueinander in der jeweiligen Befestigungsstruktur 422, 31 angeordnet sein, dass sie im Falle der miteinander verbundenen Befestigungsstrukturen unmittelbar aneinander angrenzen (siehe Figur 7). Der Steg 426 der Befestigungsstruktur 422 der Elektrodose 4 bildet somit einen Anschlag für den Steg 38 der Befestigungsstruktur 31 der Rohrschelle 3 bezüglich einer horizontalen Bewegung der Rohrschelle 3 in axialer Richtung A. Beim Verbindungsmittel 12 handelt es sich vorzugsweise um eine Schraube, welche jeweils in das Innengewinde 425, 37 in den Durchgangsöffnungen 427, 39 der Stege 426, 38 eingedreht werden kann. Der Gewindeeingriff zwischen der Gewindestange 121 der Schraube 12 und den Innengewinde 425, 37 der Befestigungsstrukturen 422, 31 führt dazu, dass eine Drehung der Schraube 12 um eine Drehachse D entlang einer ersten Drehrichtung eine translatorische Bewegung der Rohrschelle in axialer Richtung A bewirkt. Die Drehbewegung kann solange ausgeführt werden, bis die Rohrschelle 3 vollständig in der bogenförmigen Verformung 421 der Unterseite 43 der Elektrodose 4 aufgenommen ist. Dabei ist auch die Befestigungsstruktur 31 der Rohrschelle 3 vollständig in der Befestigungsstruktur 422 der Elektrodose 4 aufgenommen, wobei der Steg 38 der Befestigungsstruktur 31 der Rohrschelle 3 am Steg 426 der Befestigungsstruktur 422 der Elektrodose 4 anschlägt. Wird nun eine der ersten Drehbewegung entgegengesetzte zweite Drehbewegung durchgeführt, so bewegt sich die Rohrschelle 3 entsprechend in entgegengesetzter axialer Richtung A weg von der Elektrodose 4. Die Ausgestaltung der Befestigungsstrukturen 422, 31, insbesondere deren Gewindeeingriff mit der Schraube 12 ermöglicht somit eine stufenlose Positionseinstellung oder Tiefeneinstellung der Rohrschelle 3 in axialer Richtung A. Indem die Rohrschelle 3 dabei am Abwasserrohr 5 befestigt ist, kann über die Drehbewegung der Schraube 12 somit auch eine Tiefeneinstellung des Abwasserrohres 5erfolgen.

Wie erwähnt weist die Unterseite 43 des Aussenteils 41 zwei Befestigungs- oder Verbindungsstrukturen zur Befestigung des bzw. Verbindung mit dem Befestigungsmittel 3 auf. Nebst der im Wesentlichen U-förmig ausgebildeten Befestigungsstruktur 422 sind dies die Nuten 423, welche sich seitlich entlang der bogenförmigen Verformung 421 in der Wand des Aussenteils 41 erstrecken. In diese Nuten 423 greifen die radial nach aussen vorstehenden Rippen 32 am Flansch der Rohrschelle, welche sich parallel zueinander sowie parallel zu den Seitenschenkeln 36 der U-förmigen Befestigungsstruktur 31 der Rohrschelle 3 erstrecken. Die Rippen 32 werden beim Verbinden der Rohschelle 3 mit der Elektrodose 4 geführt in den Nuten 423 der Elektrodose 4 aufgenommen. Die Rippen 32 erstrecken sich vorzugsweise ebenso wie die U-förmige Befestigungsstruktur 31 entlang der gesamten Breite des Flansches 35. Die Breite des Flansches 35 wiederum entspricht vorzugsweise der gesamten Breite des Aussenteils 41. Dadurch wird eine geführte Verbindung entlang der gesamten Tiefe der Elektrodose 4 bereitgestellt.

Wie eingangs erwähnt ist die Elektrodose zweiteilig ausgebildet und verfügt über einen Aussenteil 41 und einen Innenteil 46, wobei der Innenteil 46 vorzugsweise lösbar im Aussenteil 41 aufnehmbar ist. Der Innenteil verfügt über eine im Wesentlichen rechteckige Grundstruktur mit einer Oberseite 47, einer Unterseite 48 und zwei seitlichen Seiten 49.. Beide seitlichen Seiten 49 des Innenteils 46 verfügen über hervorstehende Laschen 411, welche von einem Benutzer ergriffen werden können und dadurch ein Entfernen des Innenteils 46 aus dem Aussenteil 41 erleichtern. Die Unterseite 48 des Innenteils 46 weist eine weitere Ausnehmung 412 auf, durch welche sich die bogenförmige Ausnehmung des Aussenteils 41 mit dessen Befestigungsstruktur sowie der bogenförmige Flansch der Rohrschelle 3 mit dessen Befestigungsstruktur in den Innenteil 46 erstrecken können.

Weiter weist das Innenteil 46 in seinem Inneren eine Begrenzungsstruktur 413 in Form einer Begrenzungswand auf, welche sich von einer der seitlichen Seiten 49 zur anderen der seitlichen Seiten 49 erstreckt und so den Innenteil 46 in zwei Bereiche unterteilt. Ein hinterer Bereich 416 befindet sich bei einem im Aussenteil 41 eingesetzten Innenteil 42 zwischen der Begrenzungswand 413 und der Hinterseite 44 des Aussenteils 41, und ein vorderer Bereich 417 befindet sich zwischen der Begrenzungswand 413 und einer offenen Vorderseite des Innenteils 46. Wie insbesondere aus den Figuren 7 bis 9 hervorgeht, verfügt die Begrenzungswand 413 über eine Ausnehmung 414, in welche ein Stecker 415 eingesetzt werden kann. Der Stecker 415 kann rückseitig beziehungsweise wandseitig, im hinteren Bereich 416 des Innenteils 46, mit einem Netzkabel verbunden werden. Frontseitig, also im vorderen Bereich 417 des Innenteils 46, kann der Stecker 415 mit einem Elektroelement 11 wie beispielsweise einem Netzteil der Sanitäranlage verbunden werden. Zumindest eine der seitlichen Seiten 49 des Innenteils 46 weist hierfür eine Ausnehmung 418 auf, welche im Falle von einem im Aussenteil 41 eingesetzten Innenteil 46 neben einer Öffnung 419 in einer seitlichen Seite 45 des Aussenteils 41 zu liegen kommt. Dadurch verfügt die Elektrodose 4 über eine durchgehende Öffnung, durch welche ein Netzkabel über die Öffnung 419 im Aussenteil 41 und die Ausnehmung 418 im Innenteil 46 ins Innere der Elektrodose 4 eingeführt und dort mit dem Stecker 415 des Innenteils 46 verbunden werden kann. Die Begrenzungswand 413 verhindert dabei, dass ein Benutzer mit einer Hand oder einem Werkzeug an den unter hoher Spannung stehenden Stecker 415 oder das Netzkabel im hinteren Bereich 416 gelangen kann. Ein Auswechseln des Netzteils 11 hingegen ist ohne weiteres möglich, indem das frühere Netzteil frontseitig aus dem Stecker 415 gezogen und durch ein neues ersetzt wird. Diese Ausgestaltung ermöglicht somit ein sicheres und einfaches Anschliessen von Verbrauchern wie eines Dusch-WCs an die Elektrodose 4. Ein weiterer Vorteil besteht darin, dass das Anschliessen direkt durch den Monteur des Sanitätsartikels erfolgen kann und die Notwendigkeit, einen Elektriker hierfür bestellen zu müssen, dadurch entfällt. Dies erlaubt nicht nur eine effizientere, sondern auch kostengünstigere Montage.

Der Arbeitsaufwand wird weiter dadurch reduziert, dass der Stecker 415 frontseitig im Einbauzustand der Montageeinheit 2 frei zugänglich ist und, im Falle eines mit der Elektrodose 4 verbundenen Sanitärartikels, durch den Sanitärartikel überdeckt wird. Dies ist darauf zurückzuführen, dass der Zwischenraum 10, und dadurch auch die im Zwischenraum 10 aufgenommene Elektrodose 4, derart im Montagerahmen 1 angeordnet, dass er im Einbauzustand des Montagerahmens 1 im Falle eines mit dem Montagerahmen 1 verbundenen Sanitärartikels durch den Sanitärartikel überdeckt wird, ohne dass eine zusätzlich Abdeckung oder ein Einbinden des Zwischenraums in das Bauwerk beispielsweise durch Verputzen oder Verkleiden notwendig ist.

### BEZUGSZEICHENLISTE

- 1: Montagerahmen
- 11: Vertikalstreben
- 12: Horizontalstreben
- 13: teleskopierbare Füsse
- 14: Montageblech
- 15: innere Montagelöcher
- 16: äussere Montagelöcher
- 17: Auslassöffnungen
- 18: Ausnehmung

- 2: Montageeinheit

- 3: Befestigungsmittel
- 31: Befestigungsstruktur
- 32: Rippen
- 33: Schellenmantel
- 34: Schliessmechanismus
- 35: Flansch
- 36: Seitenschenkel
- 37: Innengewinde
- 38: Steg
- 39: Durchgangsöffnung

- 4: Elektrodose
- 41: Aussenteil
- 42: Oberseite
- 43: Unterseite
- 44: Hinterseite
- 45: seitliche Seiten
- 46: Innenteil
- 47: Oberseite
- 48: Unterseite
- 49: seitlichen Seiten
- 410: Ausnehmung
- 411: Laschen
- 412: Ausnehmung
- 413: Begrenzungsstruktur
- 414: Ausnehmung
- 415: Stecker
- 416: hinterer Bereich
- 417: vorderer Bereich
- 418: Ausnehmung
- 419: Öffnung
- 420: Befestigungsstruktur
- 421: Verformung
- 422: Befestigungsstruktur
- 423: Nuten
- 424: Seitenschenkel
- 425: Innengewinde
- 426: Steg
- 427: Durchgangsöffnung

- 5: Abwasserrohres
- 51: Winkelrohrstück
- 52: Abwasserrohr-Endstück

- 6: Spülrohr
- 61: Winkelrohrstück
- 62: Spülrohr-Endstück

- 7: Duschwasserleitungen
- 8: Spülkasten
- 9: Betätigungsmechanismus
- 10: Zwischenraum
- 11: Elektroelement
- 12: Verbindungsmittel
- 121: Aussengewinde

- V: vertikale Richtung
- H: horizontale Richtung
- U: Umfangsrichtung
- A: axiale Richtung
- R: radiale Richtung
- D: Drehachse

- a: Mittellinien der Montageöffnungen
- b: Mittellinie der Spülrohr-Aufnahme und des Befestigungsmittels

## Patentansprüche

1. Montageeinheit (2) zur Festlegung eines Rohres, insbesondere eines Abwasserrohres (5), und zur Stromversorgung eines Sanitärartikels, insbesondere eines WCs oder Dusch-WCs, umfassend eine Elektrodose (4) zur Stromversorgung des Sanitärartikels und ein Befestigungsmittel (3), insbesondere eine Rohrschelle, zur Befestigung des Rohrs, wobei die Elektrodose (4) an einem Montagerahmen (1) für den Sanitärartikel befestigbar ist, wobei das Befestigungsmittel (3) an der Elektrodose angeordnet ist, und
wobei die Elektrodose (4) über eine Befestigungsstruktur (422) und das Befestigungsmittel (3) über eine komplementär dazu ausgebildete Befestigungsstruktur (31) verfügt, wobei das Befestigungsmittel (3) über seine Befestigungsstruktur (31) an der Elektrodose (4) lagerbar und bezüglich der Elektrodose (4) horizontal verschiebbar ist,
**dadurch gekennzeichnet, dass** die Befestigungsstruktur (31) des Befestigungsmittels (3) sowie die Befestigungsstruktur (422) der Elektrodose (4) jeweils zumindest abschnittsweise über ein Innengewinde (37; 425) verfügen und über ein Verbindungsmittel (12) mit einem Aussengewinde (121), insbesondere eine Schraube, miteinander verbindbar sind, wobei eine Drehung des Verbindungsmittels (12) um eine Drehachse (D) eine translatorische Bewegung des Befestigungsmittels (3) in horizontaler Richtung (H) bewirkt.

2. Montageeinheit (2) nach Anspruch 1, **dadurch gekennzeichnet, dass** die Elektrodose (4) über eine weitere Befestigungsstruktur (420) verfügt, mit welcher die Elektrodose (4) an einer komplementär dazu ausgebildeten Befestigungsstruktur am Montagerahmen (1) befestigbar ist.

3. Montageeinheit (2) nach Anspruch 2, **dadurch gekennzeichnet, dass** die weitere Befestigungsstruktur (420) die Form von einem oder mehreren von der Elektrodose (4) hervorstehenden Rastelementen aufweist, welche in die als Rastaufnahme ausgebildete Befestigungsstruktur am Montagerahmen (1) einrasten.

4. Montageeinheit (2) nach einem der vorhergehenden Ansprüche, **dadurch gekennzeichnet, dass** die besagte Befestigungsstruktur (422) der Elektrodose (4) und die Befestigungsstruktur (31) des Befestigungsmittels (3) jeweils im Wesentlichen U-förmig ausgebildet sind, wobei die Seitenschenkel (36; 424) der beiden U-förmigen Befestigungsstrukturen (31; 422) eine geführte Verbindung des Befestigungsmittels (3) mit der Elektrodose (4) ermöglichen.

5. Montageeinheit (2) nach einem der vorhergehenden Ansprüche, **dadurch gekennzeichnet, dass** das Befestigungsmittel (3) eine Rohrschelle ist, welche weiter einen Schellenmantel (33) zur Umschliessung des Abwasserrohres (5) und einen Schliessmechanismus (34) zum Verschliessen des Schellenmantels (33) umfasst, wobei der Schellenmantel (33) und die Befestigungsstruktur (31) der Rohrschelle (3) spiegelsymmetrisch bezüglich einer Spiegelung an einer vertikal durch die Befestigungsstruktur (31) verlaufenden Spiegelebene ausgebildet sind.

6. Montageeinheit (2) nach einem der vorhergehenden Ansprüche, **dadurch gekennzeichnet, dass** die Elektrodose (4) einen Stecker (415) aufweist, welcher im Einbauzustand der Montageeinheit (2) wandseitig mit einem Netzkabel verbunden ist und frontseitig mit einem Elektroelement (11), insbesondere einem Netzteil, verbindbar ist.

7. Montageeinheit (2) nach Anspruch 6, **dadurch gekennzeichnet, dass** der Stecker (415) frontseitig im Einbauzustand der Montageeinheit (2) frei zugänglich ist, und wobei der Stecker (415) frontseitig im Einbauzustand, im Falle eines mit der Elektrodose (4) verbundenen Sanitärartikels, vorzugsweise durch den Sanitärartikel überdeckt wird.

8. Montagerahmen (1) für einen Sanitärartikel, insbesondere ein WC oder Dusch-WC, umfassend:
- eine Spülrohr-Aufnahme zur Aufnahme eines Spülrohrs (6) zum Zuleiten von Spülwasser in den Sanitärartikel;
- eine Montageeinheit nach einem der Ansprüche 1 bis 7, und
- mindestens eine erste und eine zweite Befestigungseinrichtung (15; 16) zur Befestigung des Sanitärartikels am Montagerahmen (1);
wobei die Spülrohr-Aufnahme, das Befestigungsmittel (3) sowie die erste und zweite Befestigungseinrichtung (15; 16) einen Zwischenraum (10) definieren,
wobei die Elektrodose (4) im Zwischenraum (10) angeordnet ist.

9. Montagerahmen (1) nach Anspruch 8, **dadurch gekennzeichnet, dass** der Zwischenraum (10) durch zwei senkrechte Ebenen, welche senkrecht durch die erste beziehungsweise zweite Befestigungseinrichtung (15; 16) verlaufen, und durch zwei horizontale Ebenen, welche horizontal durch die Spülrohr-Aufnahme beziehungsweise das Befestigungsmittel (3) verlaufen, definiert ist.

10. Montagerahmen (1) nach Anspruch 8 oder 9, **dadurch gekennzeichnet, dass** der Zwischenraum (10) derart angeordnet ist, dass er im Einbauzustand des Montagerahmens (1) frei zugänglich ist, und wobei der Zwischenraum (10) im Einbauzustand, im Falle eines mit dem Montagerahmen (1) verbundenen Sanitärartikels, vorzugsweise durch den Sanitärartikel überdeckt wird.

11. Verfahren zur Festlegung eines Rohres, insbesondere eines Abwasserrohres (5), und zur Stromversorgung eines Sanitärartikels, insbesondere eines WCs oder Dusch-WCs, mit einer Montageeinheit (2) nach einem der Ansprüche 1 bis 7, umfassend die Schritte:
- Befestigen der Elektrodose (4) an einem Montagerahmen (1),
- Befestigen der Elektrodose (4) am Befestigungsmittel (3),
- Befestigen des Befestigungsmittels (3) am Rohr, und
- Elektrisches Verbinden der Elektrodose (4) mit dem Sanitärartikel.

12. Verfahren zur Montage eines Sanitärartikels, insbesondere eines WCs oder Dusch-WCs, an einem Montagerahmen (1) nach einem der Ansprüche 8 bis 10, umfassend die Schritte:
- Befestigen der Elektrodose (4) am Montagerahmen (1),
- Befestigen des Sanitärartikels am Montagerahmen (1), und
- Elektrisches Verbinden der Elektrodose (4) mit dem Sanitärartikel.

## Claims

1. Mounting unit (2) for the fixation of a pipe, preferably of a drainage pipe (5) and for the power supply of a sanitary article, preferably of a toilet or a shower toilet, comprising an electric socket (4) for the power supply of the sanitary article, and a fastening means (3), preferably a pipe clamp, for fastening the pipe, wherein the electric socket (4) is fastenable on a mounting frame (1) for the sanitary article, wherein the fastening means (3) is arranged on the electric socket, and
wherein the electric socket (4) comprises a fastening structure (422) and wherein the fastening means (3) comprises a fastening structure (31) formed in a complementary manner thereto, wherein the fastening means (3), via its fastening structure (31), is supportable on the electric socket (4), and is horizontally displaceable with respect to the electric socket (4),
**characterized in that** the fastening structure (31) of the fastening means (3) as well as the fastening structure (422) of the electric socket (4) each comprise, at least section-wise, an inner thread (37; 425), and are connectable with each other via a connecting means (12) with an external thread (121), preferably a screw, wherein a rotation of the connecting means (12) about a rotation axis (D) causes a translational movement of the fastening means (3) in a horizontal direction (H).

2. Mounting unit (2) according to claim 1, **characterized in that** the electric socket (4) comprises a further fastening structure (420), with which the electric socket (4) is fastenable on a fastening structure which is formed in a complementary manner thereto on the mounting frame (1).

3. Mounting unit (2) according to claim 2, **characterized in that** the further fastening structure (420) comprises the form of one or more latching elements projecting from the electric socket (4), which latch into the fastening structure formed as a latching seat on the mounting frame (1).

4. Mounting unit (2) according to one of the preceding claims, **characterized in that** said fastening structure (422) of the electric socket (4) and the fastening structure (31) of the fastening means (3) are each shaped essentially in a U-form, wherein the lateral legs (36; 424) of the two fastening structures (31; 422) which are U-shaped, enable a guided connection of the fastening means (3) with the electric socket (4).

5. Mounting unit (2) according to one of the preceding claims, **characterized in that** the fastening means (3) is a pipe clamp, which further comprises a clamp jacket (33) for enclosing the drainage pipe (5) and a locking mechanism (34) for locking the clamp jacket (33), wherein the clamp jacket (33) and the fastening structure (31) of the pipe clamp (3) are formed in a mirror symmetrical manner with respect to a reflection on a mirror plane extending vertically through the fastening structure (31).

6. Mounting unit (2) according to one of the preceding claims, **characterized in that** the electric socket (4) comprises a plug (415), which in the installed state of the mounting unit (2) is connected on the wall-side with an electric cable, and is connectable on the front side with an electric element (11), preferably with a power supply unit.

7. Mounting unit (2) according to claim 6, **characterized in that** in an installed state of the mounting unit (2) the plug (415) is freely accessible on the front side, and wherein in the installed state, in case of a sanitary article connected to the electric socket (4), the plug (415) is preferably covered by the sanitary article.

8. Mounting frame (1) for a sanitary article, preferably a toilet or shower toilet, comprising:
- a drainage pipe seat for receiving a drainage pipe (6) for guiding flushing water into the sanitary article;
- a mounting unit according to one of claims 1 to 7, and
- at least a first and a second fastening device (15; 16) for fastening the sanitary article on the mounting frame (1);
- wherein the drainage pipe seat, the fastening means (3) and the first and second fastening device (15; 16) define an intermediate space (10), wherein the electric socket (4) is arranged in the intermediate space (10).

9. Mounting frame (1) according to claim 8, **characterized in that** the intermediate space (10) extends through two vertical planes which extend vertically through the first or the second fastening device (15; 16), respectively, and through two horizontal planes which extend horizontally through the drainage pipe seat or the fastening means (3), respectively.

10. Mounting frame (1) according to claim 8 or 9, **characterized in that** the intermediate space (10) is arranged such that in an installed state of the mounting frame (1) it is freely accessible, and wherein in an installed state the intermediate space (10) in case of a sanitary article connected to the mounting frame (1), preferably is covered by the sanitary article.

11. Method for the fixation of a pipe, preferably a drainage pipe (5), and for the power supply of a sanitary article, preferably of a toilet or of a shower toilet, with a mounting unit (2) according to one of claims 1 to 7, comprising the following steps:
- fastening of the electric socket (4) on a mounting frame (1),
- fastening of the electric socket (4) on the fastening means (3),
- fastening of the fastening means (3) on the pipe, and
- electric connecting of the electric socket (4) with the sanitary article.

12. Method for mounting a sanitary article, preferably a toilet or shower toilet on a mounting frame (1) according to one of claims 8-10, comprising the following steps:
- fastening of the electric socket (4) on the mounting frame (1);
- fastening of the sanitary article on the mounting frame (1), and
- electric connecting of the electric socket (4) with the sanitary article.

## Revendications

1. Unité de montage (2) pour la fixation d'un tuyau, notamment d'un tuyau pour eaux usées (5), et pour l'alimentation électrique d'un article sanitaire, notamment d'un WC ou d'un WC lavant, comprenant une prise électrique (4) pour l'alimentation électrique de l'article sanitaire et un moyen de fixation (3), en particulier un collier de serrage, pour la fixation du tuyau, dans laquelle la prise électrique (4) peut être fixée à un cadre de montage (1) pour l'article sanitaire, et que le moyen de fixation (3) est disposé sur la prise électrique, et
dans laquelle la prise électrique (4) présente une structure de fixation (422) et le moyen de fixation (3) présente une structure de fixation (31) réalisée de manière complémentaire à celui-ci, dans laquelle le moyen de fixation (3) peut être monté sur la prise électrique (4) à travers sa structure de fixation (31) et peut être déplacé horizontalement par rapport à la prise électrique (4),
**caractérisée en ce que** la structure de fixation (31) du moyen de fixation (3) ainsi que la structure de fixation (422) de la prise électrique (4) présentent chacune respectivement un filetage interne (37; 425) au moins par sections et peuvent être reliées les unes aux autres, à travers un moyen de raccordement (12) ayant un filetage extérieur (121), notamment une vis, dans laquelle une rotation du moyen de raccordement (12) autour d'un axe de rotation (D) provoque un mouvement de translation du moyen de fixation (3) dans la direction horizontale (H).

2. Unité de montage (2) selon la revendication 1, **caractérisée en ce que** la prise électrique (4) présente une structure de fixation (420) supplémentaire, avec laquelle la prise électrique (4) peut être fixée à une structure de fixation réalisée de manière complémentaire à celle-ci sur le cadre de montage. (1).

3. Unité de montage (2) selon la revendication 2, **caractérisée en ce que** la structure de fixation (420) supplémentaire a la forme d'un ou plusieurs éléments d'encliquetage qui dépassent de la prise électrique (4), lesquels s'encliquettent dans la structure de fixation sur le cadre de montage (1) conçue comme un logement à encliquetage.

4. Unité de montage (2) selon l'une des revendications précédentes, **caractérisée en ce que** ladite structure de fixation (422) de la prise électrique (4) et la structure de fixation (31) du moyen de fixation (3) sont chacune sensiblement en forme de U, avec la jambes latérales (36; 424) des deux structures de fixation en forme de U (31; 422) permettant une liaison guidée du moyen de fixation (3) à la prise électrique (4).

5. Unité de montage (2) selon l'une quelconque des revendications précédentes, **caractérisée en ce que** le moyen de fixation (3) est un collier de serrage, qui présente également une enveloppe de serrage (33) pour entourer le tuyau pour eaux usées (5) et un mécanisme de fermeture (34 ) pour fermer l'enveloppe de serrage (33), dans laquelle l'enveloppe de serrage (33) et la structure de fixation (31) du collier de serrage (3) sont réalisées de manière axialement symétrique par rapport à une réflexion sur un plan de miroir de réflexion s'étendant verticalement à travers le structure de fixation (31).

6. Unité de montage (2) selon l'une des revendications précédentes, **caractérisée en ce que** la prise électrique (4) présente une fiche (415) qui, lorsque l'unité de montage (2) est installée, est raccordée à un câble secteur sur le côté mur et peut être raccordée à un élément électrique (11) sur le côté avant, en particulier un bloc d'alimentation.

7. Unité de montage (2) selon la revendication 6, **caractérisée en ce que** la fiche (415) est librement accessible par l'avant lorsque l'unité de montage (2) est installée, et la fiche (415) est, dans le cas d'un raccordement de l'article sanitaire à la prise électrique (4), de préférence recouverte par l'article sanitaire.

8. Cadre de montage (1) pour un article sanitaire, en particulier un WC ou un WC lavant, comprenant :
- un logement de tuyau de chasse pour recevoir un tuyau de chasse (6) pour acheminer de l'eau de chasse dans l'article sanitaire ;
- une unité de montage selon l'une des revendications 1 à 7, et
- au moins un premier et un deuxième dispositifs de fixation (15 ; 16) pour fixer l'article sanitaire sur le cadre de montage (1);
dans lequel le logement de tuyau de chasse, le moyen de fixation (3) ainsi que les premier et second dispositifs de fixation (15 ; 16) définissent un espace intermédiaire (10), dans lequel une prise électrique (4) est agencée dans l'espace intermédiaire (10).

9. Cadre de montage (1) selon la revendication 8, **caractérisé en ce que** l'espace intermédiaire (10) est défini par deux plans verticaux qui traversent verticalement les premier et second dispositifs de fixation (15 ; 16) et par deux plans horizontaux qui traversent horizontalement le logement de tuyau de chasse respectivement le moyen de fixation (3).

10. Cadre de montage (1) selon la revendication 8 ou 9, **caractérisé en ce que** l'espace intermédiaire (10) est agencé de manière à être librement accessible lorsque le cadre de montage (1) est installé, et dans lequel l'espace intermédiaire (10), à l'état monté, dans le cas d'un article sanitaire relié au cadre de montage (1), est de préférence recouvert par l'article sanitaire.

11. Procédé de fixation d'un tuyau, en particulier d'un tuyau d'évacuation pour eaux usées (5), et d'alimentation électrique d'un article sanitaire, en particulier d'un WC ou d'un WC lavant, avec une unité de montage (2) selon l'une des revendications 1 à 7, comprenant les étapes :
- fixation de la prise électrique (4) sur un cadre de montage (1),
- fixation de la prise électrique (4) au moyen de fixation (3),
- fixation du moyen de fixation (3) au tuyau, et
- raccordement électrique de la prise électrique (4) avec l'article sanitaire.

12. Procédé de montage d'un article sanitaire, en particulier d'un WC ou d'un WC lavant, sur un cadre de montage (1) selon l'une des revendications 8 à 10, comprenant les étapes :
- fixation de la prise électrique (4) sur le cadre de montage (1),
- fixation de l'article sanitaire au cadre de montage (1), et
- raccordement électrique de la prise électrique (4) avec l'article sanitaire.
